# EUROPÄISCHE PATENTANMELDUNG

(11) **EP 4 385 721 A1**
(43) Veröffentlichungstag der Anmeldung: **19.06.2024**
(21) Anmeldenummer: 22213732.5
(22) Anmeldetag: 15.12.2022
(51) Int. Cl.: B32B 1/08, B32B 5/02, B32B 5/28, B32B 7/03, B32B 27/12, B32B 27/32, F16L 1/00

(54) **EXTRUDIERTES MEHRSCHICHTROHR**

(71) Anmelder: Sytech GmbH, 87600 Kaufbeuren (DE)
(72) Erfinder: ZOVKIC, David, 87600 Kaufbeuren (DE)
(74) Vertreter: Hoefer & Partner Patentanwälte mbB

(57) **Zusammenfassung**

Die Erfindung betrifft ein extrudiertes Mehrschichtrohr, im Folgenden als Rohr (1) bezeichnet, aufweisend eine Innenschicht (5) aus Kunststoff, insbesondere Polypropylen, eine Außenschicht (7) aus Kunststoff, insbesondere Polypropylen, eine Mittelschicht (6) zwischen der Innenschicht (5) und der Außenschicht (7) mit einer Matrix aus Kunststoff und einer Verstärkung aus Fasern (8), wobei die Fasern (8) in der Mittelschicht (6) mit einem Faserwinkel (α) zur Längsachse (2) des Rohrs (1) ausgerichtet sind, und wobei der Faserwinkel (α) zwischen einer Faserwinkel-Untergrenze von 1° und einer Faserwinkel-Obergrenze von 60° liegt.

## Beschreibung

Die Erfindung betrifft ein extrudiertes Mehrschichtrohr aus Kunststoff.

Es ist Aufgabe vorliegender Erfindung ein extrudiertes Mehrschichtrohr aus Kunststoff anzugeben, das bei möglichst geringer Wanddicke einem möglichst großen Innendruck dauerhaft standhält.

Die Lösung der Aufgabe erfolgt durch die Merkmale des Anspruchs 1. Die Unteransprüche zeigen bevorzugte Ausgestaltungen der Erfindung.

Die Erfindung zeigt ein extrudiertes Mehrschichtrohr, das im Folgenden der Übersichtlichkeit halber als "Rohr" bezeichnet wird. Das Rohr weist drei Schichten auf, nämlich eine Innenschicht, eine Außenschicht und eine Mittelschicht. Die Mittelschicht befindet sich zwischen der Innenschicht und der Außenschicht.

Die Innenschicht und die Außenschicht sind aus Kunststoff gefertigt, insbesondere aus Polypropylen. Die Mittelschicht weist eine Matrix aus Kunststoff auf, in der zur Verstärkung Fasern eingebettet sind. Somit handelt es sich bei dem Material der Mittelschicht um einen faserverstärkten Kunststoff. Die Fasern in der Mittelschicht liegen mit einem Faserwinkel α zur Längsachse des Rohrs. Dieser Faserwinkel α liegt zwischen einer Faserwinkel-Untergrenze von 1° und einer Faserwinkel-Obergrenze von 60°. Diese Ausrichtung der Fasern in der Mittelschicht ermöglicht eine gezielte Beeinflussung der Festigkeit des Rohrs, insbesondere gegenüber einem Innendruck im Rohr. Bei gleicher Wandstärke, insbesondere bei gleichem SDR-Wert, weisen die erfindungsgemäßen Rohre ein verbessertes Zeitstandsinnendruckverhalten gegenüber konventionellen 3-Schichtrohren oder 5-Schichtrohren auf.

Besonders bevorzugt ist vorgesehen, dass das Rohr lediglich die drei Schichten, nämlich Innenschicht, Außenschicht und Mittelschicht aufweist. Die Mittelschicht berührt dabei radial außen direkt die Außenschicht und radial innen direkt die Innenschicht.

Des Weiteren ist insbesondere vorgesehen, dass jede Schicht, nämlich die Innenschicht, die Außenschicht und die Mittelschicht, jeweils einlagig sind. Diese einlagige Ausgestaltung der einzelnen Schichten bedeutet insbesondere, dass die jeweilige Schicht über ihre Dicke hinweg möglichst homogen ist. insbesondere ist bevorzugt vorgesehen, dass in der Mittelschicht über die Dicke hinweg die Fasern gleich verteilt und gleich ausgerichtet sind, soweit dies fertigungstechnisch möglich ist.

Bevorzugt ist vorgesehen, dass die Innenschicht und/oder die Außenschicht nicht faserverstärkt ist. Dadurch gestaltet sich die Herstellung dieser beiden Schichten entsprechend einfach. Gleichzeitig wird sichergestellt, dass das Rohr außen bzw. innen entsprechend niedrige Festigkeiten und ggf. höhere Elastizitäten aufweist, was sich im gesamten - in Anbetracht der faserverstärkten Mittelschicht - positiv auf das Zeitstandinnendruckverhalten auswirkt.

Im Folgenden werden optionale Ausgestaltungen des Rohrs beschrieben, die sich insbesondere basierend auf Versuchsergebnissen und theoretischen Überlegungen als besonders vorteilhaft herausgestallt haben, um einerseits die Wanddicke des Rohrs möglichst gering zu halten und andererseits das Rohr möglichst stabil hinsichtlich des Innendrucks zu gestalten. Dabei wurden insbesondere Versuche zum Zeitstandinnendruckverhalten nach EN ISO 1167 durchgeführt. Bei diesem Normversuch wird ein Rohr beidseitig verschlossen und über eine gewisse Zeit einem gewissen Innendruck ausgesetzt. Dabei darf das Rohr keine Leckagen, Risse, Brüche oder andere Beschädigungen aufweisen.

Bevorzugt ist vorgesehen, dass in der Mittelschicht die Fasern entlang der Länge des Rohrs, also entlang der Längsachse, nicht gleich verteilt sind. Vorzugsweise weist die Mittelschicht zumindest einen spiralförmigen, sich um die Längsachse windenden Verstärkungsstrang und zumindest einen mit dem Verstärkungsstrang gleichlaufenden Zwischenstrang auf. Im Verstärkungsstrang sind die Fasern relativ zur Matrix höher konzentriert als im Zwischenstrang.

Sowohl der Verstärkungsstrang als auch der Zwischenstrang können als Spirale oder als eingängige Helix bezeichnet werden. Die beiden Stränge zusammen, also der Verstärkungsstrang zusammen mit dem Zwischenstrang bildet eine zweigängige Helix. Der Übergang vom Verstärkungsstrang zum Zwischenstrang kann - hinsichtlich der Faserkonzentration - fließend sein.

Der Vorteil dieses Verstärkungsstrangs, gegenüber einer über die Länge des Rohrs gleichbleibenden Verteilung der Fasern, ist, dass relativ wenig Fasern eingesetzt werden müssen und/oder das Rohr relativ schnell extrudiert werden kann. Dadurch kann Material, nämlich die Fasern, eingespart werden und die Herstellung des Rohrs kann relativ schnell durchgeführt werden. Nichtsdestotrotz bietet der Verstärkungsstrang mit der hohen Konzentration an Fasern die Möglichkeit zur Gestaltung eines relativ dünnen Rohrs mit gutem Zeitstandinnendruckverhalten. Grundsätzlich wurde in Versuchen festgestellt, dass Rohre mit einem Verstärkungsstrang eine höhere Zeitstandsinnendruckfestigkeit aufweisen, als vergleichbare Rohre ohne Verstärkungsstrang.

Zur genaueren Beschreibung des Verstärkungsstrangs ist definiert, dass der Verstärkungsstrang an seiner Stelle mit höchster Faser-Konzentration eine "erste Konzentration" aufweist. Der Zwischenstrang weist an seiner Stelle mit niedrigster Faser-Konzentration eine "zweite Konzentration" auf. Die beiden Konzentrationen beschreiben jeweils das Verhältnis der Masse der Matrix zur Masse der Fasern. Zur Bestimmung dieser Konzentration sollte ein ausreichend großer Bereich mit entsprechend mehreren Fasern betrachtet werden, beispielsweise ein Volumen von zumindest 1 cm³. Insbesondere ist vorgesehen, die Konzentration in der Mitte (bezüglich der Dicke) der Zwischenschicht zu bestimmen.

Die so definierte erste Konzentration beträgt vorzugsweise zumindest 110% der zweiten Konzentration. Besonders bevorzugt ist vorgesehen, dass die erste Konzentration zumindest 120%, weiter vorzugsweise zumindest 150%, der zweiten Konzentration beträgt. Dadurch wird erreicht, dass im Verstärkungsstrang eine wesentlich höhere Konzentration an Fasern vorliegt als in dem Zwischenstrang. Der positive Effekt des Verstärkungsstrangs erhöht sich dadurch.

Des Weiteren ist definiert, dass der Verstärkungsstrang mit einem Steigungswinkel β um die Längsachse des Rohrs gewunden ist. Der Steigungswinkel β ist größer 0° und kleiner 90°. Bei einem relativ großen Steigungswinkel β windet sich der Verstärkungsstrang mit entsprechend kleiner Ganghöhe um die Längsachse. Dies wirkt sich positiv auf das Zeitstandinnendruckverhalten des Rohrs aus. Durch Erhöhung des Steigungswinkels β erreicht man in der Regel höhere Extrusionsgeschwindigkeiten. Ferner steigt die Zeitstandsinnendruckfestigkeit mit zunehmendem Steigungswinkel β.

Der Steigungswinkel β liegt zwischen einer Steigungswinkel-Untergrenze und einer Steigungswinkel-Obergrenze. Dabei ist bevorzugt vorgesehen, dass der Verstärkungsstrang sich über die Länge des Rohrs mit einem konstanten Steigungswinkel β erstreckt; dies ist jedoch nicht zwingend notwendig.

Die Steigungswinkel-Untergrenze beträgt vorzugsweise 1°, weiter vorzugsweise 5°, weiter vorzugsweise 7°, weiter vorzugsweise 15°, weiter vorzugsweise 20°. Zusätzlich oder alternativ beträgt die Steigungswinkel-Obergrenze vorzugsweise 80°, weiter vorzugsweise 60°, weiter vorzugsweise 45°, weiter vorzugsweise 40°. Ober- und Untergrenze sind dabei in vorteilhafter Ausführung der Erfindung beliebig miteinander kombinierbar.

In Versuchen hat sich gezeigt, dass der Faserwinkel zwischen 1° und 60° liegen kann. Besonders bevorzugt zeigte sich jedoch, dass die Faserwinkel-Untergrenze vorzugsweise 2°, weiter vorzugsweise 5°, weiter vorzugsweise 7°, weiter vorzugsweise 10°, weiter vorzugsweise 15°, beträgt. Zusätzlich oder alternativ sollte die Faserwinkel-Obergrenze 55°, vorzugsweise 45°, weiter vorzugsweise 40°, weiter vorzugsweise 35°, betragen. Ober- und Untergrenze sind dabei in vorteilhafter Ausführung der Erfindung beliebig miteinander kombinierbar.

Insbesondere ist dabei zu beachten, dass vorteilhafterweise zumindest 50 Masse-% der Fasern in der Mittelschicht mit demselben Faserwinkel α ausgerichtet sind. Unter "demselben Faserwinkel a" wird verstanden, dass die Fasern von diesem Faserwinkel α höchstens mit +/-20°, vorzugsweise höchstens mit +/-10°, abweichen.

Des Weiteren sollte vorteilhafterweise zur Optimierung des Herstellungsprozesses, als auch für eine sinnvolle Abwägung zwischen positiven Effekten auf das Zeitstandinnendruckverhalten und den Verbrauch an Fasern beachtet werden, dass der Faseranteil in der Mittelschicht zwischen einer Faseranteil-Untergrenze und einer Faseranteil-Obergrenze liegt. Die Faseranteil-Untergrenze liegt vorzugsweise bei 5 Masse-%, weiter vorzugsweise 7 Masse-%, weiter vorzugsweise 10 Masse-%. Zusätzlich oder alternativ liegt die Faseranteil-Obergrenze vorzugsweise bei 40 Masse-%, weiter vorzugsweise 35 Masse-%, weiter vorzugsweise 30 Masse-%. Ober- und Untergrenze sind dabei in vorteilhafter Ausführung der Erfindung beliebig miteinander kombinierbar.

Die Länge der einzelnen Fasern wirkt sich positiv auf die Festigkeit des Rohrs aus. Allerdings sind zu lange Fasern im Herstellungsprozess nicht ohne weiteres zu gebrauchen. Deshalb ist bevorzugt vorgesehen, dass zumindest 70 Masse-% der Fasern in der Mittelschicht eine Länge zwischen einer Längen-Untergrenze und einer Längen-Obergrenze aufweisen. Die Längen-Untergrenze beträgt vorzugsweise 0,3mm, weiter vorzugsweise 0,4mm, weiter vorzugsweise 0,5mm. Alternativ oder zusätzlich beträgt die Längen-Obergrenze vorzugsweise 30mm, weiter vorzugsweise 25mm, weiter vorzugsweise 20mm. Ober- und Untergrenze sind dabei in vorteilhafter Ausführung der Erfindung beliebig miteinander kombinierbar.

Insbesondere ist vorgesehen, dass das hier definierte Rohr einen bestimmten SDR-Wert aufweist. Der SDR-Wert bezeichnet das Verhältnis des Rohraußendurchmessers zu seiner Wanddicke. Insbesondere beträgt der SDR-Wert des Rohrs zwischen 5 und 40, vorzugsweise zwischen 7 und 20, besonders vorzugsweise zwischen 7,4 und 17,6.

Die Innenschicht weist eine Innenschichtdicke auf, die Mittelschicht weist eine Mittelschichtdicke auf, die Außenschicht weist eine Außenschichtdicke auf. Die Schichtdicken sind jeweils in Radialrichtung und somit senkrecht zur Längsachse des Rohrs definiert. Alle Schichten zusammen, also das gesamte Rohr, weist eine Wanddicke auf. Bevorzugt summieren sich die Innenschichtdicke, die Mittelschichtdicke und die Außenschichtdicke zur Wanddicke. Bevorzugt ist vorgesehen, dass die Innenschichtdicke zwischen 10% und 50% der Wanddicke beträgt und/oder die Mittelschichtdicke zwischen 10% und 50% der Wanddicke beträgt und/oder die Außenschichtdicke zwischen 10% und 50% der Wanddicke beträgt, wobei die Prozentangaben so gewählt werden, dass sich im Gesamten 100% der Wanddicke ergibt.

Bei den Fasern für die Mittelschicht handelt es sich vorzugsweise um Glasfasern, Zellulosefasern oder Kohlenstofffasern, eingebettet in die Matrix aus Polymer.

Für die hier definierte Ausgestaltung des Rohrs wurden neben theoretischen Überlegungen diverse Versuche an unterschiedlichen Rohren durchgeführt. Insbesondere an einem extrudierten Mehrschichtrohr mit genau drei Schichten, nämlich Innenschicht, Außenschicht und Mittelschicht, jeweils in einlagiger Ausgestaltung. Dabei wurden die Rohrreihen SDR 11, 17,6 und 26 untersucht. Die Innenschichtdicke und die Mittelschichtdicke betrugen jeweils 30% und die Außenschichtdicke 40% der Wanddicke. Als Material sowohl für die Außen- als auch für die Innenschicht wurde Polypropylen (Sabic Vestolen P9421) gewählt. Für die Mittelschicht kam Polypropylen mit Glasfasern zum Einsatz (Sabic PROCOMPOUND G1620B). Der Glasfaseranteil in der Mittelschicht wurde variiert zwischen 5% und 40%. Für die Orientierung der Glasfasern wurde ein Faserwinkel α zwischen 1° und 60° gewählt. Die Glasfasern wurden dabei derart konzentriert, dass ein Verstärkungsstrang rundum die Längsachse entstand. Die Glasfaserlänge bei 70 Masse-% betrug zwischen 0,5mm und 20mm.

Die Erfindung zeigt ferner ein Verfahren zur Herstellung des vorab beschriebenen Rohrs. Die drei Schichten, nämlich Innenschicht, Außenschicht und Mittelschicht, werden dabei zeitgleich mittels Mehrschicht-Coextrusion gefertigt. Besonders bevorzugt wird dabei der Extrusionskopf für die Mittelschicht zur Ausrichtung der Fasern kontinuierlich gedreht. Die im Rahmen des erfindungsgemäßen Rohrs beschriebenen vorteilhaften Ausgestaltungen und zugehörigen Unteransprüche finden entsprechend vorteilhafte Anwendung auf das erfindungsgemäße Verfahren.

Weitere Einzelheiten, Vorteile und Merkmale der vorliegenden Erfindung ergeben sich aus nachfolgender Beschreibung eines Ausführungsbeispiels anhand der Zeichnungen. Es zeigt:
- Fig. 1: eine schematische Seitenansicht eines erfindungsgemäßen Rohrs gemäß dem Ausführungsbeispiel, und
- Fig. 2: eine schematische Schnittansicht des Rohrs aus Fig. 1.

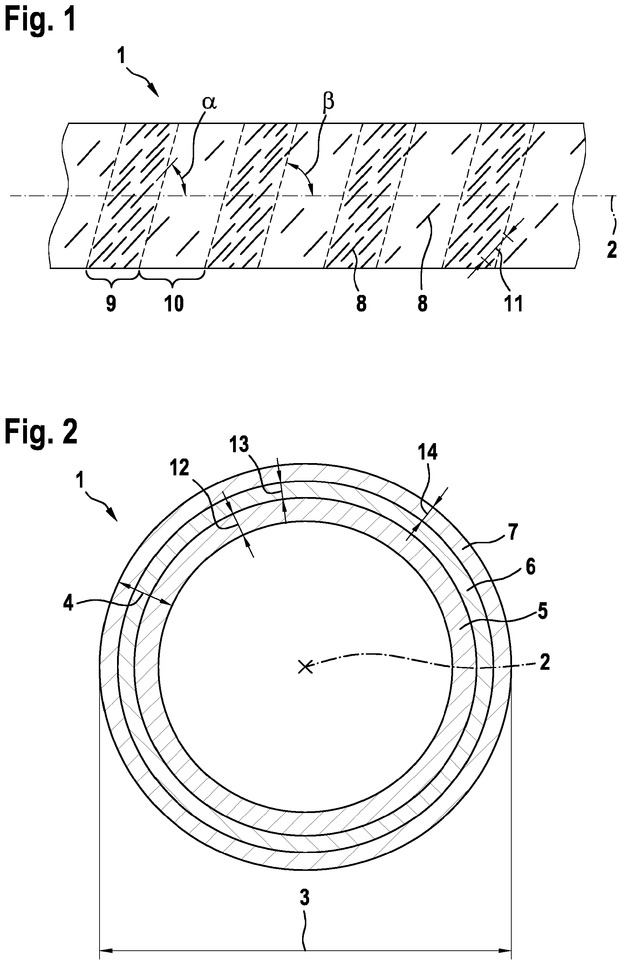

Figuren 1 und 2 zeigen ein extrudiertes Mehrschichtrohr, im Folgenden als Rohr 1 bezeichnet. Die Figuren zeigen das Rohr 1 dabei lediglich als Skizzen und sind nicht maßstabsgetreu.

Figur 1 zeigt das Rohr 1, welches sich entlang seiner Längsachse 2 erstreckt. Zur Darstellung der Erfindung sind Fasern 8 auf dem Rohr 1 dargestellt, um die Position und Ausrichtung dieser Fasern 8 zu verdeutlichen. Tatsächlich befinden sich die Fasern 8 jedoch im Inneren der Wandung des Rohrs 1.

Figur 2 verdeutlicht einen Schnitt durch das Rohr 1. Zu sehen ist, dass das Rohr 1 im Gesamten einen Außendurchmesser (dₐ) 3 und eine Wanddicke (s) 4 aufweist. Die Wanddicke 4 setzt sich dabei aus einer Innenschicht 5, einer Mittelschicht 6 und einer Außenschicht 7 zusammen.

Die Innenschicht 5 und die Außenschicht 7 bestehen lediglich aus Kunststoff ohne verstärkender Fasern, wie dies im allgemeinen Teil der Beschreibung erläutert wurde. In der Mittelschicht 6 befinden sich die in Figur 1 schematisch dargestellten Fasern 8, so dass es sich um einen faserverstärkten Kunststoff in der Mittelschicht 6 handelt.

Die Zusammenschau der Figuren 1 und 2 verdeutlicht, dass diese Fasern 8 in der Mittelschicht 6 mit einem Faserwinkel α zur Längsachse 2 geneigt sind. Gemessen wird dabei der kleinere bzw. spitze Winkel. Die einzelnen Fasern erstrecken sich über eine Faserlänge 11. Sowohl der Faserwinkel α als auch die Faserlänge 11 sind im allgemeinen Teil der Beschreibung mit entsprechenden Wertebereichen definiert, die auch für das gezeigte Ausführungsbeispiel gelten.

Ferner verdeutlicht insbesondere Figur 2, dass die Fasern 8 entlang der Länge des Rohrs 1 nicht gleich verteilt sind, sondern in einem spiralförmigen Verstärkungsstrang 9 konzentriert sind. Dieser Verstärkungsstrang 9 erstreckt sich, gleichlaufend mit einem Zwischenstrang 10, spiralförmig um die Längsachse 2. Die rein schematische Figur 1 zeugt zur Verdeutlichung der Erfindung, eine klare Grenze (gestrichelte Linien) zwischen Verstärkungssträng 9 und Zwischenstrang 10. Tatsächlich kann der Übergang vom Verstärkungsstrang 9 zum Zwischenstrang 10 kann - hinsichtlich der Faserkonzentration - fließend sein.

Der Verstärkungsstrang 9 und ebenso der Zwischenstrang 10 weisen gegenüber der Längsachse 2 einen Steigungswinkel β auf. Es wird der kleinere bzw. spitze Winkel gemessen. Bezüglich der Wertebereiche für den Steigungswinkel β wird auf den allgemeinen Teil der Beschreibung verwiesen. Figur 1 zeigt den Steigungswinkel β an der imaginären Grenze (gestrichelte Linie) zwischen Verstärkungsstrang 9 und Zwischenstrang 10; ebenso kann der Steigungswinkel β in der Mitte des Verstärkungsstrangs 9 oder der Mitte des Zwischenstrangs 10 bestimmt werden. Die Mitte des Verstärkungsstrangs 9 liegt insbesondere bei der höchsten Faserkonzentration und/oder die Mitte des Zwischenstrangs 10 bei der niedrigsten Faserkonzentration.

Fig. 2 zeigt, dass die Innenschicht 5 eine Innenschichtdicke 12, die Mittelschicht 6 eine Mittelschichtdicke 13 und die Außenschicht 7 eine Außenschichtdicke 14 aufweisen. Diese drei Schichten 12, 13, 14 summieren sich zur Wanddicke (s) 4.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Rohr
- 2: Längsachse
- 3: Außendurchmesser dₐ
- 4: Wanddicke s
- 5: Innenschicht
- 6: Mittelschicht
- 7: Außenschicht
- 8: Fasern
- 9: Verstärkungsstrang
- 10: Zwischenstrang
- 11: Faserlänge
- 12: Innenschichtdicke
- 13: Mittelschichtdicke
- 14: Außenschichtdicke
- α: Faserwinkel
- β: Steigungswinkel

## Patentansprüche

1. Extrudiertes Mehrschichtrohr, im Folgenden als Rohr (1) bezeichnet, aufweisend
• eine Innenschicht (5) aus Kunststoff, insbesondere Polypropylen,
• eine Außenschicht (7) aus Kunststoff, insbesondere Polypropylen,
• eine Mittelschicht (6) zwischen der Innenschicht (5) und der Außenschicht (7) mit einer Matrix aus Kunststoff und einer Verstärkung aus Fasern (8),
• wobei die Fasern (8) in der Mittelschicht (6) mit einem Faserwinkel (a) zur Längsachse (2) des Rohrs (1) ausgerichtet sind, und
• wobei der Faserwinkel (a) zwischen einer Faserwinkel-Untergrenze von 1° und einer Faserwinkel-Obergrenze von 60° liegt.

2. Rohr nach Anspruch 1, wobei das Rohr lediglich die drei Schichten, nämlich Innenschicht (5), Außenschicht (7) und Mittelschicht (6), aufweist.

3. Rohr einem der vorhergehenden Ansprüche, wobei jede Schicht, nämlich Innenschicht (5), Außenschicht (7) und Mittelschicht (6), einlagig ist.

4. Rohr nach einem der vorhergehenden Ansprüche, wobei die Innenschicht (5) nicht faserverstärkt ist und/oder wobei die Außenschicht (7) nicht faserverstärkt ist.

5. Rohr nach einem der vorhergehenden Ansprüche, wobei die Mittelschicht (6) zumindest einen spiralförmigen, sich um die Längsachse windenden Verstärkungsstrang (9) und zumindest einen mit dem Verstärkungsstrang (9) gleichlaufenden Zwischenstrang (10) aufweist, wobei im Verstärkungsstrang (9) die Fasern relativ zur Matrix höher konzentriert sind, als im Zwischenstrang (10).

6. Rohr nach Anspruch 5, wobei
• an einer Stelle des Verstärkungsstrangs (9) mit höchster Konzentration eine erste Konzentration definiert ist,
• und an einer Stelle des Zwischenstrangs (10) mit niedrigster Konzentration eine zweite Konzentration definiert ist,
• wobei die Konzentration jeweils als Masse der Faser (8) zur Masse der Matrix definiert ist,
• wobei die erste Konzentration zumindest 110%, vorzugsweise zumindest 120%, weiter vorzugsweise zumindest 150%, der zweiten Konzentration beträgt.

7. Rohr nach einem der Ansprüche 5 oder 6, wobei sich der Verstärkungsstrang (9) mit einem Steigungswinkel (β) um die Längsachse (2) des Rohrs (1) windet, wobei der Steigungswinkel (β) zwischen einer Steigungswinkel-Untergrenze und einer Steigungswinkel-Obergrenze liegt; wobei
• die Steigungswinkel-Untergrenze 1°, vorzugsweise 5°, weiter vorzugsweise 7°, beträgt;
• und/oder die Steigungswinkel-Obergrenze 80°, vorzugsweise 60°, weiter vorzugsweise 45°, beträgt.

8. Rohr nach einem der vorhergehenden Ansprüche, wobei
• die Faserwinkel-Untergrenze des Faserwinkels (a) 2°, vorzugsweise 5°, weiter vorzugsweise 7°, beträgt;
• und/oder die Faserwinkel-Obergrenze des Faserwinkels (a) 55°, vorzugsweise 45°, weiter vorzugsweise 40° beträgt.

9. Rohr nach einem der vorhergehenden Ansprüche, wobei zumindest 50 Masse-% der Fasern (8) in der Mittelschicht (6) mit demselben Faserwinkel (α) - mit einer Abweichung von höchstens +/- 20°, vorzugsweise höchstens +/- 10° - ausgerichtet sind.

10. Rohr nach einem der vorhergehenden Ansprüche, wobei der Faseranteil in der Mittelschicht (6) zwischen einer Faseranteil-Untergrenze und einer Faseranteil-Obergrenze liegt; wobei
• die Faseranteil-Untergrenze 5 Masse-%, vorzugsweise 7 Masse-%, weiter vorzugsweise 10 Masse-%, beträgt;
• und/oder die Faseranteil-Obergrenze 40 Masse-%, vorzugsweise 35 Masse-%, weiter vorzugsweise 30 Masse-%, beträgt.

11. Rohr nach einem der vorhergehenden Ansprüche, wobei zumindest 70 Masse-% der Fasern (8) in der Mittelschicht (6) eine Faserlänge (11) zwischen einer Längen-Untergrenze und einer Längen-Obergrenze aufweisen; wobei
• die Längen-Untergrenze 0,3mm, vorzugsweise 0,4mm, weiter vorzugsweise 0,5mm, beträgt;
• und/oder die Längen-Obergrenze 30mm, vorzugsweise 25mm, weiter vorzugsweise 20mm beträgt.

12. Verfahren zur Herstellung eines Rohrs (1) nach einem der vorhergehenden Ansprüche, wobei die drei Schichten, nämlich Innenschicht (5), Außenschicht (7) und Mittelschicht (6), zeitgleich mittels Mehrschicht-Coextrusion gefertigt werden; insbesondere wobei der Extrusionskopf für die Mittelschicht (6) zur Ausrichtung der Fasern kontinuierlich gedreht wird.
